# EUROPEAN PATENT APPLICATION

(11) **EP 4 759 889 A1**
(43) Date of publication of application: **17.06.2026**
(21) Application number: 25219102.8
(22) Date of filing: 27.11.2025
(51) Int. Cl.: C09D 17/00, C09B 67/00

(54) **A METHOD OF PRODUCING PIGMENT PASTES WITH MICROBIOLOGICAL RESISTANCE**

(71) Applicant: Inchem Polonia, 92-612 Lodz (PL)
(72) Inventor: Tokarska, Marta, 92-612 Lodz (PL)

(57) **Abstract**

The method of production of pigment pastes with microbiological resistance is characterized by the fact that the components of the pigment paste are mixed at an elevated temperature, and the water used in the technological process is decontaminated and the paste is packaged in a protective atmosphere.

## Description

The subject of the invention is a method of producing pigment pastes with microbiological resistance, devoid of biocides. Pigment pastes for colouring coating agents, such as paints and varnishes, are generally known. Pigment pastes are usually made by dispersing pigments and possibly fillers in binders or other suitable materials and mixed with a suitable base paint before use.

These types of mixed paint systems outperform conventional coatings, especially in terms of procurement and logistics. One of the ingredients for the production of pigment pastes are biocides, which protect the pastes from unwanted biological changes. An extensive market analysis has shown that none of the manufacturers of construction chemicals, both nationally and internationally, offers a product in the form of a pigment paste without biocides on the market.

Biocides have both a negative impact on the environment and human health - they can cause, for example, allergies. For this reason, discussions have been underway in the European Union for many years about new provisions that are to drastically reduce the permissible doses of biocides that can be used in the future. With this in mind, the main technological assumption of the solution is to make it possible to dispense with the use of biocides in the pigment paste recipe.

The task of the invention is to obtain a pigment paste, "self-disinfecting", obtained by applying high temperature for a sufficiently long time, which results in the resignation from the use of biocides. Analogous functionality for pastes produced using the standard production procedure was assumed to be achieved through the combined use of three components of the new production technology: increased temperature (key feature) and the use of UV-C radiation to decontaminate water used in the production process of the paste and packaging in the MAP atmosphere (two supplementary processes).

According to the invention, this task was solved in such a way that the components of the pigment paste are mixed at a temperature of 60-75 °C for 5 to 20 minutes, where the heat is the result of friction of the mixture and the water used in the technological process is subjected to UV-C irradiation

The application of the method according to the invention allows us to conclude that it has been possible to develop a new technology for the production of pigment paste without biocides, which has microbiological resistance, is stable over time, and its application parameters and physical and chemical properties are compliant with the standards of the Factory Quality Control.

An example of the implementation of the invention:
In the manner of the invention, a pool of inorganic and organic pigments, usable dispersants and auxiliaries were selected before the mixing process began. The selection of dispersants was guided by a number of properties obtained by their use of pigment products, m.in. stability, the possibility of obtaining pastes with different pigment concentrations, versatility, availability and economic considerations. When choosing the right dispersants, special emphasis was placed on the possibility of their use at elevated temperatures (it is planned to heat the pigment pastes to a maximum temperature of 75°C). In order to select the appropriate dispersants for heating, the manufacturer's information was followed, as well as the description provided in the safety data sheets. The decomposition point, flash point and boiling point were taken into account. Four dispersants (AN 200, LFS, Silco CT 1008, Exodis PC40), five inorganic pigments (Yellow 42, Red 101, Black 11, Green 17, White 6) and five organic pigments (Yellow 1, Red 254, Green 7, Red 122, Blue 15-1) were selected for preliminary studies. Then, on the basis of the above criteria, an example composition of the pastes was developed: yellow oxide paste - demineralized water - 29.5%; rheology modifier - 0.3%; skimmer - 0.2%; wetting agent - 6%; PH regulator - 1.0%; dispersant - 8%; pigment yellow 42 - 55%, then the ingredients were mixed at 70 °C for 20 minutes.

It is worth noting that the process of obtaining the paste at an elevated temperature turned out to be similar in time to the standard process, and thus increasing the temperature of the process will not generate significantly higher production costs. It should also be noted that on a small scale (laboratory scale tests) the use of water used for cooling in the standard process of rubbing pastes has been abandoned, which will also reduce costs and cause a positive environmental effect. During the paste mixing process, the process water was decontaminated using a lamp that produced UV-C radiation. As expected, the use of water decontaminated with UV-C radiation did not affect the deterioration of the physical and chemical parameters of the obtained pastes. Instead, it has eliminated potential contamination from process water. The second supplementary process, apart from the use of water disinfected with UV-C radiation, is the packaging of pigment paste in a modified atmosphere MAP. This treatment is aimed at extending the shelf life of the product, which is devoid of the biocide, which normally protects the pigment paste from contamination from the outside. The use of a sealed package with inert gas will allow you to achieve an analogous effect. A packaging and sealing machine were used to pack the obtained pigment pastes. Argon was chosen as an inert gas for packaging, due to its properties and ease of handling (heavier than air). The resulting product has been subjected to numerous tests and tests, including microbiological tests, application tests, i.e. securitization and flowability, drying time, abrasion and scratch resistance, wet scrubbing resistance, physical and chemical properties tests, aging tests. The obtained results clearly indicate that the use of the new technology for the production of pigment pastes does not have a negative impact on their colour, physical, chemical and application properties. The pigment pastes obtained according to the new technology meet the requirements of the Factory Quality Control and show stability over time (non-flocculating suspension). Replacing the use of biocides with new manufacturing technology results in a microbiologically clean product

## Claims

1. The method of production of pigment pastes with microbiological resistance, created in mixing devices, is **characterized by** the fact that the components of the pigment paste are mixed at a temperature of 60-75 °C for 5 to 20 minutes, where the heat is the result of friction of the mixture and the water used in the technological process is irradiated with UV-C rays.
